# EUROPÄISCHE PATENTANMELDUNG

(11) **EP 1 217 866 A2**
(43) Veröffentlichungstag der Anmeldung: **26.06.2002**
(21) Anmeldenummer: 01440408.1
(22) Anmeldetag: 03.12.2001
(51) Int. Cl.: H04Q 11/04

(54) **Verfahren zur Verbesserung der Übertragungsqualität von Informationsangeboten aus dem Internet**

(30) Priorität: 23.12.2000 DE 10064987
(71) Anmelder: ALCATEL, 75008 Paris (FR)
(72) Erfinder: Flehinghaus, Jürgen, 70469 Stuttgart (DE)
(74) Vertreter: Brose, Gerhard

(57) **Zusammenfassung**

Bei Informationsangeboten wie beispielsweise Bewegtbildern aus dem Internet müssen große Datenmengen übertragen werden, die einen hohen Bandbreitebedarf erfordern. In vielen praktischen Fällen steht im Übertragungsweg des Internets eine zu geringe Bandbreite zur Verfügung, so dass bei der Übertragung entsprechende Wartezeiten und mangelnde Bildqualität in Kauf genommen werden müssen. Diese Unzulänglichkeit wird weder mit der AO/DI-Technik noch mit einem Modem mit höherer Übertragungsrate beseitigt, da der eigentliche Engpass bei der Übertragung die oftmals überlastete Internetverbindung zu einem Anbieter oder das Internet selbst ist. Erfindungsgemäß wird dieses Problem dadurch gelöst, dass bei der Übertragung großer Datenmengen das Internet als Übertragungsweg ausgeschlossen wird und die Übertragung der Information vom Anbieter über einen Viewpoint direkt über das ISDN zum Nutzer erfolgt und somit durch Kombination an sich teilweise konkurrierender Dienste wie ISDN und Internet eine Verbesserung der Übertragungsqualität erreicht wird.

## Beschreibung

Die Erfindung betrifft ein Verfahren, mit dem durch die Kombination von ISDN (Integrated Services Digital Network) und Internet eine Verbesserung der Übertragungsqualität von Informationsangeboten aus dem Internet ermöglicht wird. Bei Informationsangeboten wie Bewegtbildern, beispielsweise Spielfilmen, oder Großfotos müssen große Datenmengen übertragen werden, die einen hohen Bandbreitebedarf erfordern. Im Internet steht in vielen praktischen Fällen im Übertragungsweg eine zu geringe Bandbreite zur Verfügung, so dass bei der Übertragung entsprechend Wartezeiten und mangelnde Bildqualität in Kauf genommen werden müssen.

Diese Unzulänglichkeit wird auch nicht durch den Zugriff auf das Internet über das diensteintegrierende digitale Netz ISDN mittels dynamischer Bandbreitenregelung in Abhängigkeit vom Umfang der zu übertragenden Datenmengen beseitigt, vgl. Sablowski, Ralf: Über den D-Kanal online, Funkschau Nr. 12, 2000, Seiten 38-41, WEKA Fachzeitschriften Verlag GmbH, Gruber Straße 46a, 85586 Poing. Diese Möglichkeit der dynamischen Bandbreitenregelung geht davon aus, dass bei den Internetverbindungen eines Kunden mit ISDN-Anschluß im wesentlichen Verbindungen mit geringem Bandbreitebedarf dominieren.

Höhere Bandbreiten, die beim Abruf komplexer Webseiten wie beispielsweise Bewegtbildern oder beim Datendownload erforderlich sind, benötigt ein Nutzer relativ selten.

Von dieser Überlegung geht die AO/DI-Technik aus. Dabei bezeichnet AO (Always On) die ständige Verbindung des Personalcomputers (PC) des Nutzers mit der Vermittlungsstelle über den D-Kanal der ISDN-Verbindung. Sollen umfangreiche Datenmengen übertragen werden, so können dem D-Kanal mittels Dl (Dynamic ISDN) ein oder zwei B-Kanäle zugeschaltet werden. Ist die aktuelle Datenübertragung abgeschlossen, fällt das System in den D-Kanal-Betrieb zurück. Zwar wird mit der AO/DI-Technik in bestimmten Grenzen erreicht, dass die Bandbreite an die Datenmengen angepasst wird, dennoch wird dadurch oftmals nicht das Problem gelöst, dass die Übertragung großer Datenmengen aus dem Internet auf einen PC mit großen Wartezeiten und mitunter geringer Bildqualität verbunden ist. Diese Unzulänglichkeit wird weder mit der AO/DI-Technik noch mit einem Modem mit hoher Übertragungsrate zwischen Netz und PC beseitigt, da der eigentliche Engpass bei der Übertragung die oftmals überlastete Internetverbindung von einem Nutzer zu einem Anbieter oder das Internet selbst ist.

Aus dieser Problemstellung resultiert die mit der Erfindung zu lösende Aufgabe, einem Nutzer, der sowohl eine ISDN-Telefon- als auch eine Internetverbindungsmöglichkeit hat, eine qualitativ hochwertigere Übertragung der von einem Anbieter gelieferten Informationen zu ermöglichen. Diese Aufgabe wird mit dem im ersten Patentanspruch beschriebenen Verfahren gelöst.

Der Kern der Erfindung besteht darin, dass bei der Übertragung großer Datenmengen das Internet als Übertragungsweg ausgeschlossen wird und der Anbieter direkt über das ISDN mit dem Nutzer verbunden wird und somit durch Kombination an sich teilweise konkurrierender Dienste wie ISDN und Internet eine Verbesserung der Übertragungsqualität erreicht wird.

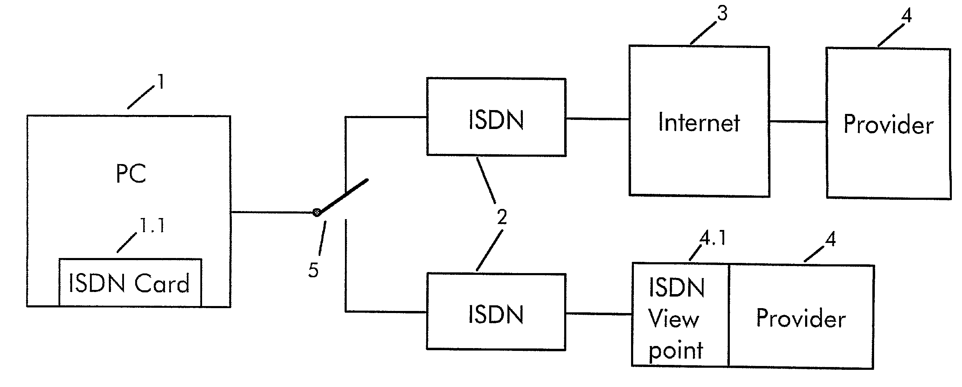

Die Erfindung wird nunmehr an einem Ausführungsbeispiel näher erläutert. In der dazugehörigen Zeichnung zeigt die Figur
ein Blockschaltbild zur Darstellung des erfindungsgemäßen Verfahrens.

In der Figur sind dargestellt ein Personalcomputer PC 1 mit einer ISDN-Card 1.1, die den ISDN-Fernsprechverkehr vom Personalcomputer 1 aus ermöglicht, ein diensteintegrierendes digitales Netz ISDN 2, ein Internet 3 und ein Anbieter 4 von Text-, Bild- und Audioangeboten mit bedarfsweise einem Viewpoint 4.1, von dem aus Bilder direkt für die Übertragung über das ISDN 2 aufbereitet werden.

Üblicherweise wird von dem PC 1 mit ISDN-Card 1.1 über das ISDN 2 eine Verbindung zum Internet 3 mittels einer Zieladresse zu einem Anbieter 4 aufgebaut. Von dem Anbieter 4 können nun Informationen unterschiedlichster Art, wie beispielsweise Spielfilme, Modenschauen, Ausstellungen in Autohäusern, Immobilienangebote oder Versteigerungen abgerufen werden. Dabei zeigt es sich, dass mit zunehmenden Datenmengen, insbesondere bei Bewegtbildern, die Übertragungsqualität sehr schnell abnimmt und die Übertragungszeitdauer zunimmt, wobei diese Auswirkungen in vielen Fällen nicht von der begrenzten Bandbreite der Endgeräte des Nutzers herrühren, sondern durch die zeitweise Überlastung des Internets bedingt sind. Eine Verbesserung der Übertragungsqualität wird erreicht, wenn der Anbieter 4 seine Informationen über einen Viewpoint 4.1 zum Abruf über das ISDN 2 zur Verfügung stellt. Die Technik des Viewpoints 4.1 wird beispielsweise derzeit angewendet, um aktuelle Wettersituationen eines bestimmten Ortes auf ein Bildtelefon oder den Bildschirm des PCs 1 über das ISDN zu übertragen. Anbieter 4 mit Viewpoint 4.1 werden nun auf ihren Präsentationsseiten darauf hinweisen, dass es wegen der großen Datenmenge zu Qualitätseinbußen bei der Übertragung im Internet kommen kann und daher die Möglichkeit besteht, das gleiche Angebot in besserer Qualität über das ISDN 2 abzurufen. Wird dieser Hinweis "angeklickt", so wird der Nutzer zunächst gefragt, ob er eine höherauflösendere ISDN-Verbindung für das vorliegende Angebot wünscht, und bei Bestätigung durch den Benutzer wird dann die Verbindung zum Internet 3 abgebrochen und eine Verbindung, ein "link" 5, über das ISDN 2 zum Viewpoint 4.1 des Anbieters 4 hergestellt. Der Benutzer kann dann zwischen einer Übertragung über einen B-Kanal und einer Übertragung über zwei B-Kanäle wählen. Vor Beendigung der ISDN-Übertragung wird der Nutzer gefragt, ob die ursprüngliche Internet-Verbindung wiederhergestellt werden soll, so dass der Nutzer die Möglichkeit hat, in den Anfangszustand seiner Verbindung zurückzukehren und über das Internet 3 zu weiteren Anbietern 4 zu gelangen.

Somit ist es vorteilhafterweise möglich und vom Benutzer steuerbar, bedarfsweise das Internet 3 zu verlassen und die Übertragung der gewünschten Information unter Umgehung des Internets 3 nur über das ISDN 2 zu veranlassen. Damit können gefragte Video/Audioübertragungen mit einer wesentlich höheren Qualität im Vergleich zur Übertragung im überlasteten Internet vom Nutzer empfangen werden. Die Anbieter von Bewegtbildern und Ton im Internet 3 können mit Hilfe des ISDN 2 und eines Viewpoints 4.1 ihre Produkte in besserer Qualität den Nutzern zur Verfügung stellen.

## Patentansprüche

1. Verfahren zur Übertragung von Informationsangeboten eines Anbieters (4) aus dem Internet (3) über das diensteintegrierende digitale Netz ISDN (2) an einen Nutzer unter Verwendung eines Viewpoints (4.1)
**dadurch gekennzeichnet, dass**
- nach Aufbau einer Verbindung von einem Personalcomputer (1) über das Internet (3) mittels ISDN (2) zu dem Anbieter (4) in dem Informationsangebot des Anbieters (4) ein Hinweis enthalten ist, dass das Informationsangebot auch über einen Viewpoint (4.1) direkt über das ISDN (2) in verbesserter Übertragungsqualität abgerufen werden kann,
- von dem Nutzer zur Verbesserung der Übertragungsqualität des Informationsangebots die Verbindung über das Internet (3) unterbrochen und eine Verbindung über das ISDN (2) zu dem Viewpoint (4.1) des Anbieters (4) aufgebaut und die Information übertragen wird,
- nach Beendigung der Übertragung über das ISDN (2) vom Nutzer gewählt wird, ob die Verbindung über das Internet (3) wiederhergestellt werden soll oder nicht.

2. Verfahren nach Anspruch 1 **dadurch gekennzeichnet, dass** der Hinweis auf den Viewpoint (4.1) des Anbieters (4) derartig auf dem Bildschirm des Personalcomputers (1) erscheint, dass durch einen Mausklick automatisch die Internetverbindung unterbrochen und die ISDN-Verbindung hergestellt wird.

3. Verfahren nach Anspruch 1 und 2 **dadurch gekennzeichnet, dass** von dem Nutzer nach Herstellung der ISDN-Verbindung gewählt werden kann, ob die Übertragung über einen B-Kanal oder über zwei B-Kanäle erfolgen soll.
